# EUROPEAN PATENT SPECIFICATION

(11) **EP 1 555 062 B1**
(45) Date of publication and mention of the grant of the patent: **29.09.2010**
(21) Application number: 05075134.6
(22) Date of filing: 19.01.2005
(51) Int. Cl.: B01D 65/02, B01D 65/08, B01D 29/66

(54) **Apparatus and method for filtering liquid**
Vorrichtung und Verfahren zur Filtration von Flüssigkeiten
Appareil et procédé de filtration de liquides

(30) Priority: 19.01.2004 NL 1025284
(43) Date of publication of application: 20.07.2005
(73) Proprietor: Fluxxion B.V., 5656 AA Eindhoven (NL)
(72) Inventor: Vos, Jan, 3940 Hechtel-Eksel (BE); Denis, Nicolaas Arnold Petrus, 6039 AA Stamproy (NL)
(74) Representative: Winckels, Johannes Hubertus F.

(56) References cited:
- DE-A- 10 224 513
- FR-A- 2 576 805
- NL-C- 1 020 657

## Description

The invention relates to an apparatus and method for filtering liquid.

From French patent application No. 2 576 805 a cross-flow liquid filtering apparatus is known which utilizes a microsieve. A microsieve has microscopic pores of a diameter of the order of magnitude of a micrometer, with which, for instance, microorganisms can be retained while liquid molecules can pass the microsieve normally. Microsieves are known, for instance from European patent application No. 728034.

In filtering through a microsieve having such small pores, use is made of so-called cross-flow filtration, whereby the liquid is pumped substantially along the supply surface of the microsieve, with only a fraction of the liquid flowing away through the pores, purified. The rest of the liquid (normally speaking the greater part) is generally collected and pumped along the microsieve again.

In practice, microsieves having such small pores have been found to clog up rapidly. On the supply surface of the microsieve, on the side of the unsieved liquid, a residue layer, such as for instance a layer of slime, is formed. To obtain a sufficient yield of filtered liquid, the residue layer needs to be removed at least in part. A known technique to achieve this is temporarily reversing the direction of flow through the microsieve, to thereby press the residue layer off the supply surface of the microsieve.

The French patent application No. 2 576 805 describes *inter* alia that this can be realized by means of a shut-off valve upstream of the microsieve. With it, the supply of liquid can be temporarily interrupted, so that the pressure on the supply side of the microsieve drops, which leads to a pressure reversal across the microsieve. This in turn leads to cleaning of the microsieve. The above-mentioned French patent application teaches nothing other than the use of this for a conventional cleaning process. In conventional cleaning processes, the pressure reversal is used incidentally, for instance once an hour or even once a day when it is found that the flow of filtered liquid has become too small. The above-mentioned French patent application is silent on the frequency and the duty cycle with which the shut-off valve is closed.

The reversal of the direction of flow through the microsieve can be effected by raising the pressure on the drain side of the microsieve or by reducing the pressure on the supply side. However, known designs of techniques to realize this have been found not to work satisfactorily. For instance, the liquid pressure on the drain surface of the microsieve can be raised by compressing the volume of a space contiguous to the drain surface with a piston. The piston then needs to be moved back and forth downstream of the microsieve, that is, in the space for "clean" liquid. Cleaning this piston thus becomes a problem in itself.

The liquid pressure on the supply surface of the microsieve can be reduced by pressure reduction on the "dirty side", i.e. in the space contiguous to the supply surface. This technique is obvious in filtering apparatuses where all of the liquid passes through the sieve, which is possible when using sieves having coarser pores than a microsieve. In that case, it suffices to apply suction to the supply channel. In the case where only a fraction of the liquid flow passes through the sieve and the rest flows along the sieve through a channel, this technique is laborious because suction necessitates a space in the channel that is closed on two sides.

Thus, quite some time is needed to enable suction. Also, the normal flow of the liquid along the supply surface is rendered impossible for a length of time. After such a disturbance, it generally takes some length of time for the normal flow along the surface to be restored again. In many cases, however, the residue layer needs to be removed rather frequently to obtain any yield at all. A long recovery period thus leads to a low efficiency of the filtering process. Also, there is a risk that the residue layer is already being restored again before the normal flow is restored, so that no material of the residue layer is discharged and/or no liquid can flow through the pores before the residue layer is back again.

DE10224513 discloses a cross-flow filtering apparatus with a switchable flow reduction element arranged to reduce liquid flow with a frequency between 0.1 and 5 Hz, in order to reverse the pressure difference across a sieve.

It is one object of the invention to provide for an increase of the yield of filtration through a microsieve by means of repeated flow reductions to reverse the pressure difference across the microsieve, with a flow reduction element that makes it possible quickly to realize a large flow reduction.

It is another object of the invention to make it possible to detach a residue layer on a microsieve with a high frequency, with limited loss of filtering time, by means of repeated flow reductions to reverse the pressure difference across the microsieve, with a flow reduction element that makes it possible quickly to realize a large flow reduction.

The invention provides an apparatus for filtering a liquid according to claim 1. According to the invention, use is made of a flow reduction element, preferably a flow interrupter, in the channel through which the liquid flows along the supply side of a microsieve. The supply surface of the microsieve borders on the channel downstream of the flow reduction element, and a pump with which the liquid is pumped through the channel is preferably situated upstream of the flow reduction element.

The flow reduction element preferably comprises a supply pipe having an elongate cross section and a moving element with a drive for moving the moving element transversely to the relatively longer axis so as to block the cross section for flow to the microsieve. Thus, with a small movement, a large flow reduction can be quickly realized. The movement can for instance be realized by a rotation about an axis. The moving element preferably comprises a hollow channel which is connected to a bypass channel leading to a supply vessel at a beginning of the flow channel, so that liquid from the supply pipe at the flow reduction flows into the hollow channel.

By temporarily reducing the liquid supply in each case with the flow reduction element, in each case a reduced pressure is created on the supply side of the microsieve, whereby the residue layer on the supply side is lifted at least in part off the supply surface. Preferably, the flow is interrupted substantially completely (barring, at most, leakage flows), to realize a reduced pressure as fast as possible, which increases the yield. After recovery of the flow, a sufficient excess pressure is rapidly created again to allow a fraction of the liquid to flow through the microsieve. This manner of reversing pressure has been found to enable a high frequency of interruption while preserving a high filter yield. Filtering with useful interruption frequencies of more than 1 Hz, or more than 5 Hz and even in excess of 50 Hz is feasible. Thus, switching the flow reduction element constitutes an integral part of the filtering process and not an exceptional condition that is effected incidentally, for instance once an hour or once a day.

The maximum pressure difference across the microsieve is preferably determined dynamically, in that flow reduction is interrupted before the pressure on the supply surface of the microsieve stabilizes during the reduction (not stabilizing is understood to mean, for instance, that the pressure change remains less than 90% and typically less than 50% of the change upon prolonged interruption). The length of the flow reduction in this case determines the stroke of the pressure. Thus, the pressure can be rapidly raised and reduced, which increases the yield of filtering. The time length of the reduction is preferably chosen such that the pressure on the supply surface of the microsieve reaches equally far above as below the pressure on the drain surface of the microsieve. In this way, a maximum cleaning is obtained with a minimal chance of damage to the microsieve. Without departing from the invention, however, for instance the reduced pressure can be chosen to be greater than the excess pressure, insofar as this is consistent with avoiding damage, thereby enabling a quick removal of the residue layer.

In one embodiment, for the purpose of the flow reduction, the liquid flow from the pump is diverted to a bypass channel. Thus, the pump can continue to work unhindered during the flow reduction.

These and other objectives and advantages of the invention will be described with reference to the figures in which a number of embodiments are shown by way of example.
- Figure 1: shows a filtering circuit
- Figure 2: shows a relation between pressure and time
- Figures 3a,b: show a cross section of an interrupter
- Figure 4: shows a detail of an interrupter

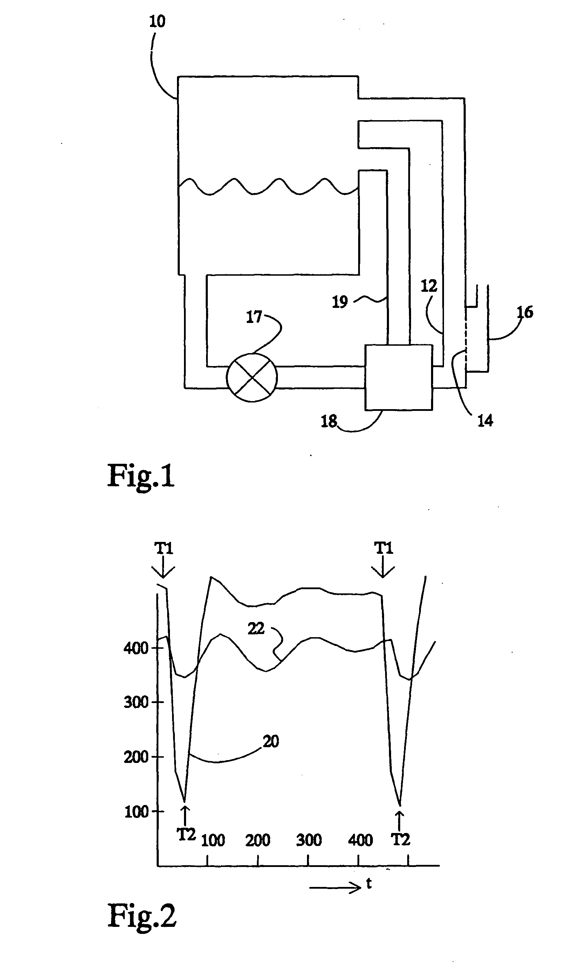

Figure 1 shows a filtering circuit with a storage vessel 10, a liquid channel 12, a microsieve 14, a drain 16, a pump 17, an interrupter 18 and a bypass channel 19. Liquid channel 12 runs from storage vessel 10, in succession via a pump 17, interrupter 18 and along a surface of microsieve 14 back to storage vessel 10. Drain 16 is contiguous to the surface of microsieve 14 facing away from channel 12. Bypass channel 19 connects interrupter 18 with storage vessel 10.

In operation, pump 17 normally pumps liquid from storage vessel 10 through interrupter 18 along the surface of microsieve 14 back to storage vessel 10. Microsieve 14 has pores each having, for instance, a photolithographically defined diameter D from a range between typically 0.1 and 10 micrometers (depending on the desired filtration). Techniques of making microsieves having such pores are known per se and do not form part of the present invention. Through the pores, a purified portion of the liquid that is guided along the surface of microsieve 14 flows away to drain 16. A residue layer is thereby formed on the supply surface of microsieve 14, facing the channel 12, which residue layer has adverse properties characteristic for microsieves.

Interrupter 18 is used for periodically shutting off the liquid flow to a part of channel 12 that includes microsieve 14. As a result, in each case, the pressure-increasing effect of pump 17 falls out temporarily adjacent the microsieve 14.

Fig. 2 shows a graph of a feasible pressure curve (in mBar (= 10² Pascal)) as a function of time (in milliseconds). A first curve 20 shows the pressure on the supply side of microsieve 14 (i.e. in channel 12 adjacent microsieve 14). A second curve 22 shows the pressure on the drain side of microsieve 14 (i.e. in drain 16). This pressure is for instance controlled by means of the gas pressure above liquid in drain 16.

At time T1, the flow through channel 12 to microsieve 14 is interrupted with interrupter 18, and at time T2 this flow is admitted again. As appears from the figure, the pressure on the supply side of microsieve 14 drops after time T1, from a value above the pressure on the drain side of microsieve 14 to a value below this latter pressure. After time T2, the pressure on the supply side rises again to the original value.

As is visible in the figure, it is possible, through temporary interruption of channel 12, to realize a momentary pressure reversal and subsequent recovery. The reversed pressure difference from the drain side to the supply side preferably reaches a value that is approximately equal to the pressure difference from the supply side to the drain side in the absence of the interruption.

As a result of the pressure difference, the residue layer is lifted off the supply side of microsieve 14, which makes it better possible for liquid to flow through the pores in microsieve 14. One or more different mechanisms can thus contribute to a yield increase. For instance, there can be an increase of the fraction of the time that liquid flows through the pores, in particular shortly after the reduced pressure has been applied, when the residue layer is still partly "loose". For this purpose, it is not necessary to realize a reduced pressure for so long that the residue layer is removed entirely, which in the case of microsieves cannot always be accomplished even then. Under the circumstances, also less residue can get a chance to return onto the supply surface of the microsieve before the flow of the liquid along the microsieve has recovered sufficiently to entrain material.

Depending on the circumstances, after removal of the interruption and recovery of the liquid flow through channel 12, a part of the lifted residue layer is entrained by the liquid flow before the layer can resettle on the supply side of microsieve 14. Thus, subsequently, a larger flow through microsieve 14 remains possible, with little loss of time for the pressure reversal. But also if the residue layer falls back, still, upon each pressure pulse, more flow through microsieve 14 will be possible.

The flow to drain 16 generally becomes larger with increasing frequency of the pressure reversals. A typical useful value of this frequency is in the range of from 0.3 Hz to 50Hz, or for milk for instance in the range of 7-12 Hz. The frequency is preferably fine-adjusted depending on the magnitude of the flow to drain 16, so that the frequency increases according as microsieve 14 clogs up more. This can be realized with a control loop, which includes a flow rate meter in drain 16 and drives the frequency of closure of interrupter 18, but the frequency can also be set manually.

In the example of Fig. 2, the stroke performed by the pressure is determined dynamically by the length of the interruption. The greater the length of the interruption, the greater the pressure stroke. The length of the interruption is preferably settable and in one embodiment is set such that the minimum pressure in channel 12 at the supply surface of microsieve 14 is substantially equally far below the pressure in drain 16 at the drain surface as the maximum pressure (in the absence of the interruption) at the supply surface of microsieve 14 is above the pressure in drain 16 at the drain surface. The pressure difference thus prevents the risk of damage to microsieve 14, with a maximum cleaning effect. Without departing from the invention, if the excess pressure is normally not in the neighborhood of the pressure above which there is a risk of damage, it is also possible, for instance, to use a greater reduced pressure than this excess pressure. A typical time length of an interruption that can thus be used for promoting the working of a microsieve is between 5 and 200 milliseconds.

The apparatus is preferably provided with a control computer which is programmed to control the length of the interruption. The necessary time length generally depends inter alia on the type of liquid. In one embodiment, use is then made of a pressure gauge (not shown) in channel 12 at microsieve 14, or of a differential pressure gauge (not shown) between channel 12 and drain 16, and the length of the interruption is controlled depending on the measured pressure or the measured differential pressure to realize the desired pressure difference. Without departing from the invention, the time length can also be set manually.

It will be clear that a short interruption of the flow to channel 12 suffices. In the example of the figure, the interruption is not longer than 5 msec, but an interruption length in the range of for instance 5 to 100 msec is possible in a simple manner. With such short interruptions, the pressure changes dynamically without the amount of liquid in channel 12 changing essentially, so that the liquid flow is quickly restored after removal of the interruption. Microsieve 14 is preferably placed close to the outlet of interrupter 18, so that the required pressure reversal can be realized with a minimal interruption length. The pressure drops less fast further down the channel 12, so that a longer interruption would be needed if microsieve 14 were arranged there. However, such decay is not strong, so that there is sufficient freedom in positioning the microsieve.

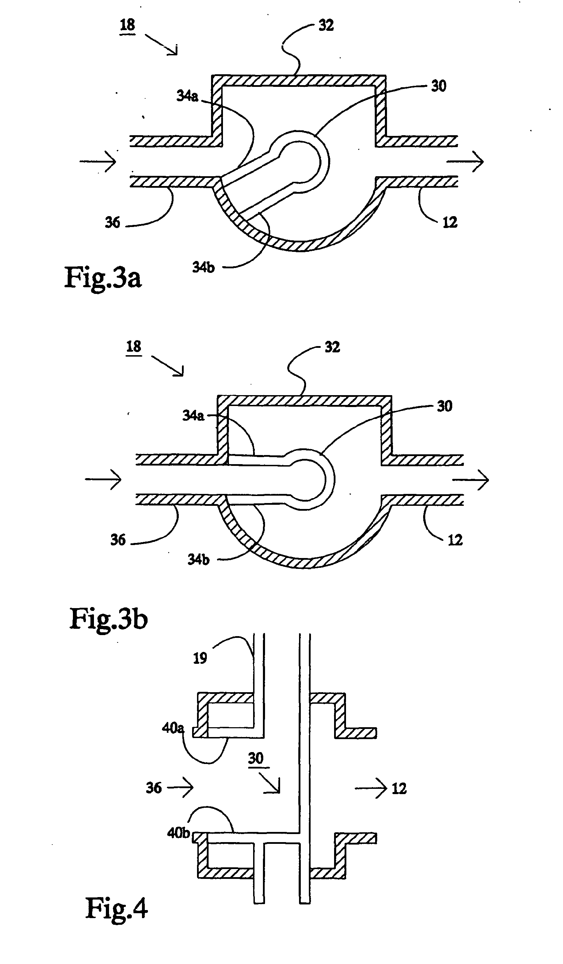

Figures 3a,b show schematically a cross section of an embodiment of interrupter 18. This embodiment comprises a housing 32 having therein a hollow shaft 30 which is rotatable about an axis perpendicular to the plane of the paper. From the shaft 30 extend walls 34a,b which, through rotation of shaft 30, are movable between a blocking position (Fig. 3b) in which the supply channel 36 from pump 17 (not shown) is connected between walls 34a,b to the inside of shaft 30, and a flow-through position (Fig. 3a) in which the liquid flow of supply channel 36 flows to the part of channel 12 which includes microsieve 14 (not shown).

Fig. 4 schematically shows a cross section of the embodiment of the interrupter in a plane through the shaft 30 and supply channel 36. Walls 34a,b (not shown) on shaft 30 are connected by sidewalls 40a,b. Walls 34a,b and sidewalls 40 form enclosing walls of a discharge channel which is connected to bypass channel 19 and through rotation of shaft 30 can be connected to supply channel 36 to block liquid flow to microsieve 14 (not shown).

Shaft 30 is preferably driven by a drive which periodically rotates shaft 30 from the through-flow position to the blocking position and back. The drive (not shown) includes for instance a pneumatic cylinder which rotates shaft 30 back and forth via a lever.

As shown, supply channel 36 and the discharge channel formed by walls 34a,b and sidewalls 40a,b are preferably elongate in shape, i.e. wider in the axial direction of shaft 30 than high transversely to this direction. Thus, a comparatively small rotation is needed to block a comparatively large liquid flow.

Pump 17 is for instance a rotary pump, but the invention is not limited thereto. The use of bypass channel 19 is a preferred embodiment which makes it possible for most designs of pump 17 to continue working normally while flow to channel 12 is blocked at microsieve 14. The bypass channel 19 can naturally be omitted if the pump is capable of pumping against a blockade for a short time without the pressure rising high, or if the pump can be momentarily stopped, synchronously with blocking. Thus, an excessive pressure pulse upon removal of the interruption of channel 12 is avoided. This reduces the chance of damage to microsieve 14, which is generally very thin and fragile.

In another embodiment, pump 17 can be placed downstream of microsieve 14 in channel 12. Upon blocking of channel 12, the pressure then falls as a result of pump 17 continuing to pump. Now, too, upon blocking, the pressure falls on the supply side of the microsieve 14. However, this embodiment has the disadvantage that the pressure does not fall as fast as in the embodiment of Fig. 1. Moreover, with many pumps, special measures are required to ensure that the pump continues to function normally upon interruption (for instance a pump suitable for that purpose, or switching on a bypass to the supply of the pump when channel 12 is interrupted).

Although a single microsieve 14 is shown in the wall of channel 12, it will be clear that without departing from the invention, more microsieves can be arranged in the wall. Preferably, all these microsieves are disposed substantially equally far from the interrupter 18, so that comparable pressure pulses occur.

Further, it will be clear that although a single channel 12 is shown, the channel can naturally be branched, either upstream of the interrupter 18, so that more interrupters need to be used, or downstream of interrupter 18, in which case one interrupter is sufficient.

Although the drawings show an interrupter which in each case completely shuts off flow through channel 12, or flow through bypass channel 19, it will be clear that the desired pressure variations can also be realized if the channel 12 is not completely closed: the pressure already falls as soon as the resistance in channel 12 increases, for instance through narrowing of the passage opening. The same holds for the complete closure of bypass channel 19.

It will be clear that a substantially complete closure is the most efficient manner of realizing the pressure reversal. Other forms of resistance increase, such as narrowing or lengthening of the channel between pump 17 and microsieve 14, can also be used to repeatedly reduce the flow to microsieve 14 and hence the pressure.

Although microsieve 14 is represented such that the wall of channel 12 continues essentially straight on through microsieve 14, it will be clear that without departing from the invention, the wall may also be recessed inwardly or outwardly at the microsieve 14, so that the liquid flow proceeding straight on can also run at some distance along the supply surface of microsieve 14. The microsieve may also be arranged at any angle.

Further, it will be clear that the embodiment with circulation to vessel 10 is not requisite. Without departing from the invention, a single passage of liquid along microsieve 14 can be used if a low filtering yield is not a problem. Recirculation leads to a higher yield, although in that case, of course, also measures are needed to discharge sieved-out material.

## Claims

1. An apparatus for filtering a liquid, which apparatus is provided with:
- a flow channel (12);
- a pump (17) in the flow channel (12);
- a microsieve (14) having a supply surface and a drain surface, mutually connected by pores in the microsieve (14), the supply surface being in communication with the flow channel (12), such that a liquid flow through the flow channel (12) passes at least in part along the supply surface;
- a drain (16) for filtered liquid, which drain (16) is contiguous to the drain surface facing away from the flow channel (12);
- a switchable flow reduction element (18) in the flow channel (12), upstream of the supply surface of the microsieve (14), for reducing the liquid flow through the flow channel (12) to the microsieve (14) repeatedly during filtration, such that a pressure difference across the microsieve (14) in each case reverses sign, **characterized in that** the flow reduction element (18) comprises a supply pipe (36), which is part of the flow channel (12), having an elongate cross section, with a relatively longer axis and a relatively shorter axis, and a moving element (30) with a drive for causing the moving element (30) to move transversely to the relatively longer axis between a blocking position and a flow-through position with a frequency between 0.3 Hz and 50 Hz.

2. An apparatus according to claim 1, wherein the moving element (30) comprises a hollow channel which is connected to a bypass channel (19) leading to a supply vessel (10) at a beginning of the flow channel (12), bypassing the microsieve (14), so that liquid from the supply pipe (36) at the flow reduction flows through the bypass channel (19) back to the supply vessel (10).

3. An apparatus according to claim 1 or 2, wherein the pump (17) is included in the flow channel (12) upstream of the flow reduction element (18) and the supply surface of the microsieve (14).

4. An apparatus according to claim 3, arranged to keep the pump (17) in operation while the liquid flow is repeatedly reduced with the flow reduction element (18).

5. An apparatus according to claim 4, provided with a bypass channel (19) connected to the flow reduction element (18), wherein the flow reduction element (18) is arranged to divert the liquid flow repeatedly from a part of the flow channel (12) leading to the microsieve (14), to the bypass channel (19) and vice versa.

6. An apparatus according to any one of the preceding claims, provided with a storage vessel (10) and wherein the flow channel (12) passes via, in succession, the pump (17) and the flow reduction element (18) to the supply surface and from the supply surface back to the storage vessel (10).

7. A method for filtering a liquid through a microsieve (14) having a supply surface and a drain surface mutually connected by pores, in which method
- a flow of liquid is pumped through a channel along the supply surface;
- filtered liquid is drained from the drain surface outside the channel;
- with a frequency between 0.3 Hz and 50 Hz, repeatedly a flow reduction is generated in the channel upstream of the supply surface, such that a pressure difference across the microsieve (14) in each case temporarily reverses sign, **characterized in that** the flow reduction is generated in a supply pipe (36) having an elongate cross section, with a relatively longer axis and a relatively shorter axis, by moving a moving element (30) transversely to the relatively longer axis between a blocking position and a flow-through position with a frequency between 0.3 Hz and 50 Hz.

8. A method according to claim 7, wherein a time length of the flow reductions is made so long that a stroke of the first pressure reaches substantially equally far above and below a second pressure on the drain surface.

9. A method according to claim 7 or 8, wherein the pump (17) remains in operation during the flow reductions.

10. A method according to claim 9, wherein the liquid flow is repeatedly diverted from a part of the flow channel (12) leading to the microsieve (14), to a bypass channel (19) and vice versa.

11. A method according to any one of claims 7 to 10, wherein the liquid is milk and the frequency is between 7 and 12 Hz.

12. A method according to any one of claims 7 to 11, wherein the flow in each case is reduced for a time interval of a length between 5 and 200 milliseconds.

## Patentansprüche

1. Eine Vorrichtung zum Filtern einer Flüssigkeit, wobei die Vorrichtung aufweist:
- einen Fließkanal (12);
- eine Pumpe (17) in dem Fließkanal (12);
- ein Mikrosieb (14) mit einer Zuflussoberfläche und einer Abflussoberfläche, die miteinander über Poren im Mikrosieb (14) verbunden sind, wobei die Zuflussoberfläche in Verbindung mit dem Fließkanal (12) steht, so dass ein Flüssigkeitsfluss durch den Fließkanal (12) wenigstens teilweise entlang der Zuflussoberfläche fließt;
- einem Abfluss (16) für die gefilterte Flüssigkeit, wobei der Abfluss an die Abflussfläche, die vom Fließkanal wegeweist, anschließt;
- ein schaltbares Durchflussreduktionselement (18) im Fließkanal (12) flussaufwärts der Zuflussoberfläche des Mikrosiebes (14), um den Flüssigkeitsfluss durch den Fließkanal (12) zu dem Mikrosieb (14) während einer Filtration wiederholt zu reduzieren, so dass eine Druckdifferenz über das Mikrosieb (14) jeweils die Richtung ändert;
**dadurch gekennzeichnet, dass**
- das Durchflussreduktionselement (18) eine Zuflussleitung (36) umfasst, die Teil des Fließkanals (12) ist, mit einem länglichen Querschnitt mit einer relativ längeren Achse und einer relativ kürzeren Achse und einem beweglichen Element (30) mit einem Antrieb um das bewegliche Element (30) quer zu der relativ längeren Achse zwischen einer blockierenden Position und einer Durchflussposition mit einer Frequenz zwischen 0.3 Hz und 50 HZ zu bewegen.

2. Vorrichtung nach Anspruch 1, wobei das bewegliche Element (30) einen hohlen Kanal umfasst, der unter Umgehung des Mikrofilters (14) mit einem Bypasskanal (19), der zu einem Vorratsbehälter (10) an einem Anfang des Fließkanals (12) führt, verbunden ist, so dass die Flüssigkeit von der Zuflussleitung (36) bei der Flussreduktion durch den Bypasskanal (19) zurück in den Vorratsbehälter (10) fließt.

3. Vorrichtung nach einem der Ansprüche 1 oder 2, wobei die Pumpe (17) im Fließkanal (12) flussaufwärts des Durchflussreduktionselement (18) und der Zuflussoberfläche des Mikrosiebes (14) eingebracht ist.

4. Vorrichtung nach Anspruch 3, hergerichtet um die Pumpe (17) in Betrieb zu halten, während der Flüssigkeitsfluss wiederholt mittels dem Durchflussreduktionselement (18) reduziert wird.

5. Vorrichtung nach Anspruch 4, ausgerüstet mit einem Bypasskanal (19) der mit dem Durchflussreduktionselement (18) verbunden ist, wobei das Durchflussreduktionselement (18) dafür vorgesehen ist den Flüssigkeitsfluss wiederholt von einem Teil des Fließkanals (12) der zu dem Mikrofilter (14) führt zu dem Bypasskanal (19) umzuleiten, und umgekehrt.

6. Vorrichtung nach einem der vorgehenden Ansprüche, ausgerüstet mit einem Vorratsbehälter (10) und wobei der Fließkanal nacheinander über die Pumpe (17) und das Durchflussreduktionselement (18) zu der Zuflussoberfläche fließt und von der Zuflussoberfläche zurück zu dem Vorratsbehälter (10).

7. Verfahren zum Filtern einer Flüssigkeit durch ein Mikrosieb (14) mit einer Zuflussoberfläche und einer Abflussoberfläche die miteinander über Poren verbunden sind, in welchem Verfahren
- eine Flüssigkeitsfluss durch einen Kanal entlang der Zuflussoberfläche gepumpt wird;
- die gefilterte Flüssigkeit von der Abflussoberfläche außerhalb des Kanals abgeführt wird;
- mit einer Frequenz zwischen 0.3 Hz und 50 Hz wiederholte eine Flussreduktion in dem Kanal flussaufwärts der Zuflussoberfläche erzeugt wird, so dass ein Druckunterschied über das Mikrosieb (14) jeweils vorrübergehend die Richtung ändert,
**dadurch gekennzeichnet, dass**
- die Flussreduktion in einer Zuflussleitung (36) mit einem länglichen Querschnitt mit einer relativ längeren Achse und einer relativ kürzeren Achse, erzeugt wird, dadurch dass ein bewegliches Element (30) quer zu der relativ längeren Achse zwischen einer blockierenden Position und einer Durchflussposition mit einer Frequenz zwischen 0.3 Hz und 50 Hz bewegt wird.

8. Verfahren nach Anspruch 7, wobei die Zeitlänge der Flussreduktionen so lang gemacht wird, dass ein Takt des ersten Drucks mit einem zweiten Druck, der im wesentlichen gleich weit über und unter dem ersten Druck liegt, die Abflussfläche erreicht.

9. Verfahren nach einem der Ansprüche 7 oder 8, wobei die Pumpe (17) während der Flussreduktion in Betrieb bleibt.

10. Verfahren nach Anspruch 9, wobei der Flüssigkeitsfluss wiederholt von einem Teil des Flusskanals (12) der zu dem Mikrosieb (14) führt in einen Bypasskanal (19) umgeleitet wird, und umgekehrt.

11. Verfahren nach einem der Ansprüche 7 bis 10, wobei die Flüssigkeit Milch ist und die Frequenz zwischen 7 und 12 Hz liegt.

12. Verfahren nach einem der Ansprüche 7 bis 12, wobei der Fluss jeweils für ein Zeitintervall einer Länge zwischen 5 und 200 Millisekunden reduziert wird.

## Revendications

1. Un appareil pour filtrer un liquide, lequel appareil est muni de : un conduit d'écoulement (12) ; une pompe (17) sur le conduit d'écoulement (12) ; un microtamis (14) possédant une surface d'entrée et une surface de sortie reliées mutuellement par des pores du microtamis (14), la surface d'entrée étant en communication avec le conduit d'écoulement (12), de façon qu'un débit de liquide traversant le conduit d'écoulement (12) passe au moins en partie le long de la surface d'entrée ; un drain (16) pour le liquide filtré, lequel drain (16) est contigu à la surface de sortie située à l'opposé du conduit d'écoulement (12) ; un élément commutable de réduction de débit (18) sur le conduit d'écoulement (12), en amont de la surface d'entrée du microtamis (14), pour réduire de façon répétée le débit de liquide à travers le conduit d'écoulement (12) vers le microtamis (14) lors de la filtration, de façon qu'à chaque fois une différence de pression à travers le microtamis (14) change de signe, **caractérisé en ce que** l'élément de réduction de débit (18) comprend un tuyau d'entrée (36), qui fait partie du conduit d'écoulement (12) et possède une section transversale allongée avec un axe relativement long et un axe relativement court, et un élément mobile (30) avec un moyen d'entraînement pour amener l'élément mobile (30) à se déplacer transversalement à l'axe relativement long entre une position d'arrêt et une position de passage à une fréquence comprise entre 0,3 Hz et 50 Hz.

2. Un appareil selon la revendication 1, dans lequel l'élément mobile (30) comprend un conduit creux relié à un conduit de dérivation (19) qui mène à un réservoir d'alimentation (10) disposé au début du conduit d'écoulement (12) et qui évite le microtamis (14), de sorte que du liquide provenant du tuyau d'entrée (36) lors de la réduction de débit reflue vers le réservoir d'alimentation (10) à travers le conduit de dérivation (19).

3. Un appareil selon la revendication 1 ou 2, dans lequel la pompe (17) est implantée sur le conduit d'écoulement (12) en amont de l'élément de réduction de débit (18) et de la surface d'entrée du microtamis (14).

4. Un appareil selon la revendication 3, conçu pour maintenir la pompe (17) en fonctionnement pendant que le débit de liquide est réduit de façon répétée par l'élément de réduction de débit (18).

5. Un appareil selon la revendication 4, muni d'un conduit de dérivation (19) relié à l'élément de réduction de débit (18), sur lequel l'élément de réduction de débit (18) est implanté pour dévier de façon répétée vers le conduit de dérivation (19) le débit de liquide d'une partie du conduit d'écoulement (12) menant au microtamis (14), et inversement.

6. Un appareil selon l'une quelconque des revendications précédentes, muni d'un réservoir (10) et dans lequel le conduit d'écoulement (12) traverse successivement la pompe (17) et l'élément de réduction de débit (18) pour aboutir à la surface d'entrée et, de la surface d'entrée, revient au réservoir (10).

7. Un procédé pour filtrer un liquide à travers un microtamis (14) possédant une surface d'entrée et une surface de sortie reliées mutuellement par des pores, procédé dans lequel un débit de liquide est pompé à travers un conduit le long de la surface d'entrée ; du liquide filtré est drainé hors du conduit à travers la surface de sortie ; à une fréquence comprise entre 0,3 Hz et 50 Hz, une réduction de débit est réalisée de façon répétée dans le conduit en amont de la surface d'entrée, de façon qu'à chaque fois une différence de pression à travers le microtamis (14) change temporairement de signe, **caractérisé en ce que** la réduction de débit est réalisée dans un tuyau d'entrée (36) possédant une section transversale allongée, avec un axe relativement long et un axe relativement court, en déplaçant un élément mobile (30) transversalement à l'axe relativement long entre une position d'arrêt et une position de passage à une fréquence comprise entre 0,3 Hz et 50 Hz.

8. Un procédé selon la revendication 7, dans lequel la durée des réductions de débit est calculée pour que la première pression soit successivement supérieure et inférieure, d'une valeur sensiblement égale, à une seconde pression régnant au niveau de la surface de sortie.

9. Un procédé selon la revendication 7 ou 8, dans lequel la pompe (17) reste en fonctionnement durant les réductions de débit.

10. Un procédé selon la revendication 9, dans lequel le débit de liquide est dévié de façon répétée d'une partie du conduit d'écoulement (12) menant au microtamis (14) vers un conduit de dérivation (19), et inversement.

11. Un procédé selon l'une quelconque des revendications 7 à 10, dans lequel le liquide est du lait, et la fréquence est comprise entre 7 et 12 Hz.

12. Un procédé selon l'une quelconque des revendications 7 à 11, dans lequel le débit est réduit à chaque fois pendant un intervalle de temps compris entre 5 et 200 millisecondes.
